# EUROPÄISCHE PATENTSCHRIFT

(11) **EP 4 032 620 B1**
(45) Veröffentlichungstag und Bekanntmachung des Hinweises auf die Patenterteilung: **09.08.2023**
(21) Anmeldenummer: 21153017.5
(22) Anmeldetag: 22.01.2021
(51) Int. Cl.: B05C 11/10, B05C 11/11

(54) **SCHMELZGERÄT ZUM BEREITSTELLEN EINES AUFGESCHMOLZENEN MEDIUMS**
MELTING APPARATUS FOR PROVIDING A MOLTEN MEDIUM
APPAREIL DE FUSION PERMETTANT DE FOURNITURE UN MILIEU FONDU

(43) Veröffentlichungstag der Anmeldung: 27.07.2022
(73) Patentinhaber: Robatech AG, 5630 Muri (CH)
(72) Erfinder: MÖSLI, Urs, 8405 Winterhur (CH); KLINKERT, Martin, 8905 Arni (CH)
(74) Vertreter: Franke, Markus

(56) Entgegenhaltungen:
- EP-A1- 0 076 057
- EP-A2- 0 353 792
- EP-A2- 0 872 284

## Beschreibung

Die vorliegende Erfindung betrifft ein Schmelzgerät zum Bereitstellen eines aufgeschmolzenen Mediums, insbesondere zum Bereitstellen eines aufgeschmolzenen Klebstoffs.

In verschiedensten Industrien werden Schmelzklebstoffe eingesetzt, um Teile miteinander zu verbinden. Derartige Klebstoffe müssen vor dem Verarbeiten durch Einwirkung von Wärme vom festen Zustand in einen flüssigen Zustand bzw. pastösen Zustand überführt werden. Dies erfolgt durch Schmelzgeräte.

Das aufzuschmelzende Medium kann beispielsweise in Form von Granulat, Pellets, Blöcken oder Kerzen vorliegen.

Schmelzgeräte zum Bereitstellen eines aufgeschmolzenen Mediums, insbesondere Schmelzgeräte zum Bereitstellen eines aufgeschmolzenen Klebstoffs, weisen typischerweise ein Gehäuse und einen innerhalb des Gehäuses ausgebildeten Schmelztank auf. Der Schmelztank dient dem Aufschmelzen des aufzuschmelzenden Mediums, wobei der Schmelztank in der Regel mittels einer elektrischen Heizung beheizbar ist. Um dem Schmelzgerät, nämlich dem Schmelztank, das aufzuschmelzende Medium zuzuführen, weist das Schmelzgerät eine Einfüllöffnung auf. Über diese Einfüllöffnung wird das Medium in fester Form dem Schmelztank zugeführt. Dies kann manuell erfolgen.

Bei Schmelzgeräten zum Aufschmelzen von festen Schmelzklebstoffen erfolgt das Aufschmelzen des in festem Zustand vorliegenden Schmelzklebstoffs in der Regel in einem Schmelztank, wobei dieser feste Schmelzklebstoff in dem Schmelztank solange erhitzt wird, bis dieser in verflüssigter Form vorliegt. Anschließend kann dieser aufgeschmolzene Klebstoff mittels einer Fördereinrichtung, beispielsweise einer Pumpe, zu einem Verbraucher, beispielsweise einer Abgabeeinrichtung, gefördert werden. Die Wärmeübertragung von dem Schmelztank an den aufzuschmelzenden Klebstoff erfolgt im Wesentlichen über Berührungsstellen vom Schmelztank zum festen Schmelzklebstoff, somit über die Wandungen des Schmelztanks. Auch bereits verflüssigter Klebstoff überträgt Wärme an den noch festen Klebstoff, allerdings ist diese Art der Wärmeübertragung bzw. des Aufschmelzens weniger effizient als bei einem direkten Kontakt zwischen festem Schmelzklebstoff und der Wandung. Um eine möglichst gute Wärmeübertragung und somit ein besonders gutes bzw. schnelles Aufschmelzen des Schmelzklebstoffs zu erreichen, sind daher, insbesondere im unteren Teil des Schmelztanks, in dem typischerweise die Fluidverbindung zu der Fördereinrichtung besteht, die Wandungen mit Rippen ausgestattet. Kritisch bei der Verwendung von Schmelzgeräten ist insbesondere der Einschaltvorgang des Schmelzgeräts. Die Anforderung an ein Schmelzgerät besteht darin, nach dem Einschalten möglichst schnell eine Einsatzbereitschaft des Schmelztanks zu gewährleisten, somit zu gewährleisten, dass, insbesondere im Bereich einer Ansaugöffnung bzw. Abgabeöffnung zu der Fördereinrichtung, beispielsweise einer Förderpumpe, aufgeschmolzenen Klebstoff in ausreichender Menge vorliegt, damit vermieden wird, dass nicht vollständig aufgeschmolzener Klebstoff in die Fördereinrichtung und von dort in die Abgabeeinrichtung gelangt, da dies zu einer Beschädigung der Fördereinrichtung und/oder der Abgabeeinrichtung führen kann. Zu diesem Zweck werden üblicherweise in der Nähe der Ansaugstelle bzw. der Abgabeöffnung Rippen für eine gute Wärmeübertragung vorgesehen. Die Leistungsfähigkeit von Schmelzgeräten hängt unter anderem von diesen Rippen in der Nähe der Abgabeöffnung bzw. der Ansaugstelle ab, da bei einer sehr hohen geforderten Schmelzleistung und einem sehr hohen Klebstoffverbrauch ein zuverlässig verflüssigter Schmelzklebstoff im Bereich der Abgabeöffnung bezüglich der maximalen Förderleistung einer der limitierenden Faktoren ist. Allerdings ist die Ausbildung von Rippen im Bereich der Ansaugstelle bzw. der Abgabeöffnung mit diversen Nachteilen verbunden, insbesondere hinsichtlich eines Entleerens und einer Reinigung des Schmelztanks.

Je nach Einsatz und Verwendung vom Schmelzgerät kann es erforderlich sein, dass unterschiedliche Schmelzklebstoffe verarbeitet werden. Das bedeutet, dass bei einer Umstellung der Produktion der vorgängig verwendete Schmelzklebstoff möglichst vollständig aus dem Schmelzgerät entfernt werden muss. Ferner ist es von Zeit zu Zeit auch notwendig, den Schmelztank vom in das Innere des Schmelztanks gelangten Verunreinigungen, beispielsweise verbranntem Klebstoff, von außen eingedrungenem Dreck, Verklumpungen und Ähnlichem, zu reinigen. Ferner kommt es bei der Verwendung von Schmelzklebstoffen zu Verunreinigungen des Schmelztanks. Vor allem bei Anwendungen mit geringem Klebstoffverbrauch und bei längeren Unterbrechungen des Betriebs erfährt der Klebstoff eine Alterung. Beispielsweise kondensieren Klebstoffdämpfe in der Umgebung der Einfüllöffnung des Schmelztanks und bedecken dadurch Oberflächen des Schmelztanks und des Schmelzgeräts. Klebstoff, der an den Wandungen vom Schmelzgerät bzw. an Wandungen des Schmelztanks anhaftet, bleibt dort auch beim Nachfüllen von festem Klebstoff haften. Diese Schicht erfährt durch die thermische Belastung eine besonders starke Alterung und kann durch Sauerstoffeinwirkung verbrennen. Reaktiver Klebstoff, wie beispielsweise PUR, kann durch den Einfluss von Luftfeuchtigkeit aushärten. Beim Betrieb bildet sich somit eine unerwünschte Kruste aus gealtertem oder ausgehärtetem und verbranntem Klebstoff, die die Wärmeübertragung beeinträchtigt. Ferner besteht die Gefahr, dass Teile dieses gealterten oder ausgehärteten Klebstoffs in das Schmelztankinnere gelangen und von dort in den Bereich der Ansaugöffnung bzw. Abgabeöffnung zu der Fördereinrichtung. Bei der Reinigung des Schmelztanks wird diese Schicht bzw. Kruste typischerweise mechanisch von der Wandung abgelöst und gelangt somit in Form von losen Teilen in das Schmelztankinnere. Diese losen, festen Bestandteile müssen entfernt werden, um eine Beschädigung der Förderpumpe und/oder der Abgabeeinrichtung und/oder eine Belegung eines Filters zu vermeiden.

Aufgrund der Gestaltung von typischen Schmelztanks, insbesondere solchen mit Rippen, insbesondere mit Rippen im Bereich der Ansaugöffnung, ist die Reinigung der Schmelztanks sehr aufwendig. Insbesondere bei größeren, festen Bestandteilen, die in das Schmelztankinnere gelangt sind, ist es häufig nicht möglich, den Schmelztank mittels der Fördereinrichtung zu entleeren, insbesondere wenn die Abgabeöffnung des Schmelztanks und/oder Kanäle der Fördereinrichtung relativ kleine Querschnitte aufweisen. Bei größeren bzw. gröberen Verunreinigungen kann es sogar notwendig sein, den Schmelztank aus dem Schmelzgerät auszubauen und händisch zu entleeren. Problematisch bei einem solchen Entleeren, beispielsweise mittels Kippen, ist es, dass, beispielsweise aufgrund der Rippen, Vorsprünge und Hinterschneidungen gebildet sind, die ein einfaches Entleeren verhindern. Aufgrund der Rippen, insbesondre aufgrund von Rippen im Bereich der Ansaug- bzw. Abgabeöffnung, ist es auch nur schwer möglich, mit Reinigungswerkzeugen Verunreinigungen zu entfernen, insbesondere Verunreinigungen im Bereich der Ansaugöffnung bzw. der Abgabeöffnung vollständig zu entfernen. Auch eine Reinigung des Schmelztanks von der Einfüllöffnung aus ist aufgrund von Rippen und Hinterschneidungen problematisch. Eine Reinigung bekannter Schmelztanks ist daher mit einem erheblichen Zeitaufwand verbunden und führt häufig nur zu unbefriedigenden Ergebnissen. Die in dem Schmelztank verbleibenden Verschmutzungen haben bei einem erneuten Start der Produktion die Tendenz, einen Klebstofffilter rasch zuzusetzen oder nachfolgende Komponenten, wie Abgabegeräte oder Fördereinrichtungen oder Dosiergeräte zu beschädigen oder in deren Funktion zu beeinträchtigen.

Für Schmelzgeräte zum Aufschmelzen von einem anderen Medium als Klebstoff gelten die obigen und nachfolgenden Ausführungen entsprechend.

Aus der EP 0 076 057 A1 ist eine Vorrichtung zum Schmelzen und Abgeben eines thermoplastischen Materials bekannt, wobei diese Vorrichtung einen Schmelztank zum Aufschmelzen des thermoplastischen Materials aufweist. Der Schmelztank weist eine Ablassbohrung zur Entleerung des Schmelztanks auf. Diese Ablassbohrung weist ein Gewinde auf, wobei die Ablassbohrung mittels eines Ablassstopfens verschlossen ist, wobei der Ablassstopfen zu diesem Zweck in einem Ablassstopfenadapter eingeschraubt ist, wobei dieser Ablassstopfenadapter wiederum in das Gewinde der Ablassbohrung eingeschraubt ist.

Aus der EP 0 353 792 A2 ist eine Vorrichtung zum Schmelzen und Abgeben eines thermoplastischen Materials bekannt, wobei diese Vorrichtung einen Schmelztank aufweist, wobei der Schmelztank einen Ablass zum Ablassen des aufgeschmolzenen Materials aufweist, wobei dieser Ablass mittels eines Stopfens verschlossen ist.

Die beiden vorgenannten Druckschriften erlauben zwar ein Ablassen von verflüssigtem Medium aus der Ablassöffnung zwecks Entleeren des Schmelztanks, allerdings besteht weiterhin die Problematik, im Bereich der Ansaugöffnung bzw. der Abgabeöffnung des Schmelztanks zu der Fördereinrichtung ein möglichst schnelles Aufheizen bzw. zuverlässiges Aufschmelzen des Mediums bei dennoch möglichst einfacher Reinigung des Schmelztanks in diesem Bereich zu ermöglichen.

Aufgabe der vorliegenden Erfindung ist es daher, ein Schmelzgerät zum Bereitstellen eines aufgeschmolzenen Mediums zu schaffen, das die vorgenannten Nachteile überwindet.

Gelöst wird diese Aufgabe durch ein Schmelzgerät, das die Merkmale des Patentanspruchs 1 aufweist.

Das erfindungsgemäße Schmelzgerät dient dem Bereitstellen eines aufgeschmolzenen Mediums, insbesondere dem Bereitstellen eines aufgeschmolzenen Klebstoffs. Zu diesem Zweck weist das Schmelzgerät einen Schmelztank auf, wobei der Schmelztank eine Schmelzkammer zum Aufnehmen und Aufschmelzen des aufzuschmelzenden Mediums aufweist. Das aufzuschmelzende Medium liegt vorzugsweise in Form von Granulat, Pellets, Blöcken oder Kerzen vor. Das Schmelzgerät weist eine Heizeinrichtung zum Beheizen der Schmelzkammer auf. Bei dieser Heizeinrichtung kann es sich beispielsweise um eine elektrische Heizeinrichtung handeln. Die Schmelzkammer weist einen oberen Kammerabschnitt und einen unteren Kammerabschnitt auf. Der Schmelztank weist ferner eine Abgabeöffnung auf, wobei die Abgabeöffnung mit einer Fördereinrichtung zum Fördern von aufgeschmolzenem Medium fluidverbindbar ist. Die Abgabeöffnung kann beispielsweise als Kanal, insbesondere als Ansaugkanal, oder als Ansaugstutzen ausgebildet sein. Bei der Fördereinrichtung kann es sich beispielsweise um eine Förderpumpe, insbesondere um eine Kolbenpumpe oder Zahnradpumpe, handeln. Die Fördereinrichtung muss nicht notwendigerweise unmittelbar mit der Abgabeöffnung verbindbar sein bzw. verbunden sein. So ist es durchaus denkbar, dass zwischen der Abgabeöffnung und der Fördereinrichtung weitere Komponenten, wie beispielsweise ein Verteiler, Zwischenstücke oder Adapter, angeordnet sind. Um den Schmelztank zu entleeren, insbesondere ohne, dass aufgeschmolzenes Medium durch die Abgabeöffnung gefördert werden muss, weist der Schmelztank eine Ablassöffnung auf. Sowohl die Abgabeöffnung als auch die Ablassöffnung münden in den unteren Kammerabschnitt. Diese Art der Anordnung der Ablassöffnung und Abgabeöffnung hat den Vorteil, dass aufgrund der Schwerkraft aufgeschmolzener Klebstoff bzw. aufgeschmolzenes Medium von dem oberen Kammerabschnitt in den unteren Kammerabschnitt fließt und sich somit dort ansammelt bzw. vom oberen Kammerabschnitt in den unteren Kammerabschnitt und somit in Richtung der Abgabeöffnung bzw. in Richtung der Ablassöffnung fließt. Das Schmelzgerät weist einen Verschlusskörper zum Verschließen der Ablassöffnung auf, wobei in einer Schließposition des Verschlusskörpers, in der der Verschlusskörper die Ablassöffnung verschließt, ein Endabschnitt des Verschlusskörpers in den unteren Kammerabschnitt hineinragt.

Die Ausgestaltung des Verschlusskörpers mit einem Endabschnitt, der in den unteren Kammerabschnitt hineinragt, hat den Vorteil, dass das für den aufgeschmolzenen Klebstoff bzw. das aufgeschmolzene Medium im unteren Kammerabschnitt zur Verfügung stehende Volumen verkleinert wird. Dies hat den Vorteil, dass, aufgrund des geringeren Volumens, bei einem Einschalten des Schmelzgeräts das im Bereich des unteren Kammerabschnitts befindliche Medium schneller aufgeschmolzen wird, da zum einen das aufzuschmelzende Volumen verkleinert ist und ferner ein Verhältnis von der Fläche, die die aufgeheizten Wandungen des Schmelztanks kontaktiert, zum Volumen des aufzuschmelzenden Mediums im unteren Kammerabschnitt vergrößert wird. Eine Produktion kann somit früher beginnen. Somit übernimmt der in den unteren Kammerabschnitt hineinragende Endabschnitt des Verschlusskörpers quasi die Aufgabe, die sonst im Bereich des unteren Kammerabschnitts ausgebildeten Rippen zukommt. Der besondere Vorteil besteht nun darin, dass diese dem besseren, insbesondere schnellerem, Aufheizen des Mediums dienenden Strukturen an dem Verschlusskörper ausgebildet sind, somit auf am Schmelztank ausgebildete Rippen zwecks Wärmeübertragung verzichtet werden kann, die typischerweise zu einer verwinkelten Geometrie führen, die eine Reinigung des unteren Kammerabschnitts erschweren. Da die die Aufgabe der Rippen übernehmende Struktur, nämlich der Endabschnitt des Verschlusskörpers, Bestandteil des Verschlusskörpers ist, ist ein Entleeren und/oder Reinigen des Schmelztanks erleichtert. Wenn der Verschlusskörpers aus der Ablassöffnung entfernt wird, beispielsweise zwecks Ablassen des aufgeschmolzenen Mediums, wird auch der Endabschnitt aus dem unteren Kammerabschnitt entfernt. Dadurch behindert der Endabschnitt im Gegensatz zu Rippen das Entleeren nicht. Ferner ist auch die Reinigung des unteren Kammerabschnitts leichter möglich, da bei einer etwaigen Reinigung der Endabschnitt im Gegensatz zu Rippen den Zugang zu dem unteren Kammerabschnitt nicht erschwert, beispielsweise Reinigungswerkzeuge unproblematisch durch die Ablassöffnung in den unteren Kammerabschnitt eingeführt werden können. Trotz eines etwaigen Verzichts oder der Reduktion von Rippen ist eine hohe Schmelzleistung gewährleistet, da der Endabschnitt des Verschlusskörpers quasi die Aufgabe der Rippen übernehmen kann, bzw. das Fehlen von Rippen zumindest teilweise kompensieren kann.

Im Zusammenhang mit einem Ablassen des Mediums und insbesondere einem Reinigen des unteren Kammerabschnitts bzw. des Schmelztanks als solchen wird es als besonders vorteilhaft angesehen, wenn der Verschlusskörper vollständig aus der Ablassöffnung entnehmbar ist. Dadurch ist der untere Kammerabschnitt besonders gut von der Ablassöffnung aus zugänglich, beispielsweise um ein Reinigungswerkzeug in den unteren Kammerabschnitt einzuführen.

Vorzugsweise ist die Ablassöffnung größer als die Abgabeöffnung. Dadurch wird das Entleeren und Reinigen des Schmelztanks über die Ablassöffnung erleichtert. Insbesondere beträgt ein Verhältnis einer Querschnittsfläche der Ablassöffnung zu einer Querschnittsfläche der Abgabeöffnung 1,2 bis 20, vorzugsweise 2 bis 8.

Die Ablassöffnung weist vorzugsweise eine Quererstreckung, insbesondere einen Durchmesser, von 3 cm bis 10 cm auf. Die Abgabeöffnung weist vorzugsweise eine Quererstreckung, insbesondere einen Durchmesser, von 1 cm bis 4 cm auf.

Hinsichtlich eines Entleerens des Schmelztanks wird es als besonders vorteilhaft angesehen, wenn sich die Ablassöffnung im Bereich des tiefsten Punkts, insbesondere am tiefsten Punkt des unteren Kammerabschnitts befindet bzw. die Ablassöffnung den tiefsten Punkt des unteren Kammerabschnitts bildet. Als besonders vorteilhaft wird es angesehen, wenn sich die Abgabeöffnung ebenfalls im Bereich des tiefsten Punkts des unteren Kammerabschnitts befindet.

Es wird als besonders vorteilhaft angesehen, wenn der Endabschnitt als Zapfen und/oder als Rippe und/oder als Schaft und/oder Stab ausgebildet ist. Als besonders vorteilhaft wird es angesehen, wenn der Endabschnitt zylindrisch ausgebildet ist.

Es wird als besonders vorteilhaft angesehen, wenn der Endabschnitt, insbesondere der gesamte Verschlusskörper, aus Metall und/oder einer Legierung besteht. Da Metalle bzw. Legierungen eine besonders gute Wärmeleitfähigkeit aufweisen, kann mittels des Verschlusskörpers zusätzlich Wärme in den unteren Kammerabschnitt eingebracht werden. Dies kann beispielsweise dadurch erfolgen, dass der Verschlusskörper eine beheizte Wandung des Schmelztanks unmittelbar kontaktiert und/oder mittels der Heizeinrichtung unmittelbar beheizt wird.

Bei dem Metall handelt es sich insbesondere um Aluminium oder Kupfer. Bei der Legierung handelt es sich insbesondere um eine Aluminium- und/oder Kupferlegierung.

Es ist durchaus denkbar, dass die Oberfläche des, vorzugsweise metallischen, Verschlusskörpers, eine Beschichtung aufweist.

Es wird als vorteilhaft angesehen, wenn der Endabschnitt in der Schließposition des Verschlusskörpers von Wandungen des Schmelztanks, die den unteren Kammerabschnitt begrenzen, und/oder Rippen des Schmelztanks beabstandet ist.

Bei dieser Gestaltung wird eine Beschädigung der Wandungen des Schmelztanks, beispielsweise eine Beschädigung einer Beschichtung der Wandungen, vermieden. Ferner ist eine derartige Gestaltung bezüglich eines möglichst freien Strömens des aufgeschmolzenen Mediums von Vorteil. Insbesondere wird ein Aufstauen von aufgeschmolzenem Medium vermieden.

Es wird als besonders vorteilhaft angesehen, wenn in der Schließposition der Endabschnitt von sämtlichen Strukturen des Schmelztanks beabstandet ist.

Im Hinblick auf eine besonders einfache Reinigung und eines besonders günstigen Fließens von aufgeschmolzenem Medium wird es als vorteilhaft angesehen, wenn der untere Kammerabschnitt, abgesehen von dem Endabschnitt des Verschlusskörpers, frei von Einbauten und/oder frei von in den unteren Kammerabschnitt hineinragenden Strukturen ist. Insbesondere ist der untere Kammerabschnitt frei von Rippen.

Es wird als vorteilhaft angesehen, wenn der Schmelztank eine den unteren Kammerabschnitt begrenzende, in Richtung der Ablassöffnung abfallende Bodenfläche aufweist, beispielsweise diese Bodenfläche in einem Winkel von 1,5° bis 3° zu einer Aufstellebene des Schmelzgeräts geneigt ist.

Als besonders vorteilhaft wird es angesehen, wenn das Volumen des unteren Kammerabschnitts kleiner ist als das Volumen des oberen Kammerabschnitts.

Als besonders vorteilhaft wird es angesehen, wenn der untere Kammerabschnitt als in Richtung des oberen Kammerabschnitts offener, insbesondere länglicher, Kanal ausgebildet ist, wobei die Ablassöffnung an einem Ende des Kanals in den Kanal mündet.

Vorzugsweise mündet die Ablassöffnung in einer Längsrichtung des Kanals in den Kanal.

Als besonders vorteilhaft wird es angesehen, wenn der obere Kammerabschnitt eine oder mehrere Durchtrittsöffnungen aufweist, wobei die eine oder mehreren Durchtrittsöffnungen in den unteren Kammerabschnitt münden. Vorzugsweise münden die Durchtrittsöffnungen in einen als Kanal ausgebildeten unteren Kammerabschnitt und bilden auf diese Weise einen in Richtung des oberen Kammerabschnitts offenen Kanal.

Der untere Kammerabschnitt ist vorzugsweise frei oder zumindest in Ausflussrichtung frei von Ecken und/oder Kanten und/oder sonstigen vorstehenden Geometrien oder zumindest sind Ecken, Kanten und vorstehende Geometrien verrundet. Dadurch wird die Reinigung des unteren Kammerabschnitts erleichtert.

Es wird als besonders vorteilhaft angesehen, wenn der insbesondere als Kanal ausgebildete untere Kammerabschnitt zumindest im an die Bodenfläche angrenzenden Teil, vorzugsweise der gesamte untere Kammerabschnitt, einen konstanten Querschnitt oder einen sich in Richtung der Ablassöffnung erweiternden Querschnitt aufweist. Eine derartige Gestaltung hat sich hinsichtlich einer Reinigung des Schmelztanks als vorteilhaft erwiesen, da das Einführen von Reinigungswerkzeugen und die Zugänglichkeit von sämtlichen Stellen des unteren Kammerabschnitts mittels einem durch die Ablassöffnung eingeführten Reinigungswerkzeugs erleichtert wird. Auch das Ablassen von aufgeschmolzenem Medium wird durch diese Gestaltung erleichtert.

Insbesondere ist vorgesehen, dass der untere Kammerabschnitt eine Längserstreckung aufweist, wobei der Endabschnitt des Verschlusskörpers eine Längserstreckung aufweist, wobei die Längserstreckung des Endabschnitts des Verschlusskörpers zwischen 10 % und 90 %, bevorzugt zwischen 20 % und 80 %, besonders bevorzugt zwischen 20 % und 60 %, insbesondere zwischen 25 % und 50 %, der Längserstreckung des unteren Kammerabschnitts beträgt. Durch diese Längenverhältnisse kann ein zuverlässiges und schnelles Aufschmelzen des im unteren Kammerabschnitt befindlichen, festen Mediums, insbesondere bei Wiedereinschalten und/oder Erstinbetriebnahme des Schmelzgeräts, begünstigt werden.

Vorzugsweise beträgt eine Längserstreckung des Endabschnitts 5 cm bis 15 cm. Bevorzugt beträgt eine Längserstreckung des untere Kammerabschnitts 6 cm bis 30 cm. Es ist aber auch durchaus denkbar, dass die Längserstreckung des unteren Kammerabschnitts bis zu 80 cm beträgt.

Als besonders vorteilhaft wird es angesehen, wenn, in der Schließposition, in einem Bereich, in dem der Endabschnitt angeordnet ist, der untere Kammerabschnitt eine Quererstreckung und der Endabschnitt des Verschlusskörpers eine Quererstreckung aufweisen, wobei ein Verhältnis der Quererstreckung des Endabschnitts zu der Quererstreckung des unteren Kammerabschnitts zwischen 10 % und 90 %, bevorzugt zwischen 20 % und 80 %, besonders bevorzugt zwischen 35 % und 60 %, insbesondere zwischen 40 % und 55 %, beträgt.

Als besonders vorteilhaft wird es angesehen, wenn der Endabschnitt in der Schließposition konzentrisch zu einer Längsachse des unteren Kammerabschnitts angeordnet ist.

Vorzugsweise beträgt eine Quererstreckung, insbesondere ein Durchmesser, des Endabschnitts 1,5 cm bis 4 cm. Bevorzugt beträgt eine Quererstreckung, insbesondere ein Durchmesser, des unteren Kammerabschnitts 3 cm bis 10 cm.

Vorzugsweise sind der Endabschnitt und/oder der untere Kammerabschnitt im Wesentlichen zylindrisch oder zylindrisch ausgebildet.

Vorzugsweise ist ein Querschnitt der Ablassöffnung größer oder gleich einem Querschnitt des unteren Kammerabschnitts in einem an die Ablassöffnung angrenzenden Bereich des unteren Kammerabschnitts. Dadurch werden in diesem Bereich Hinterschneidungen, die ein Ablassen des aufgeschmolzenen Mediums bzw. ein Reinigen des unteren Kammerabschnitts erschweren, vermieden.

Als besonders vorteilhaft wird es angesehen, wenn die Abgabeöffnung und die Ablassöffnung an unterschiedlichen Seiten in den unteren Kammerabschnitt münden. Insbesondere schließen die beiden Seiten einen Winkel von 85° bis 95°, vorzugsweise einen Winkel von 90° ein.

Vorzugsweise ist der untere Kammerabschnitt geneigt ausgebildet, wobei der untere Kammerabschnitt von der Abgabeöffnung in Richtung der Ablassöffnung abfällt. Dadurch sammeln sich Verunreinigungen, die typischerweise eine höhere Dichte als das aufgeschmolzene Medium aufweisen, im Bereich der Ablassöffnung und nicht im Bereich der Abgabeöffnung an.

Vorzugsweise sind die Abgabeöffnung und die Ablassöffnung an unterschiedlichen Außenseiten des Schmelztanks ausgebildet. Insbesondere schließen die Außenseiten einen Winkel von 85° bis 95°, bevorzugt von 90° ein.

Vorzugsweise münden die Abgabeöffnung und die Ablassöffnung in Längsrichtung des unteren Kammerabschnitts voneinander beabstandet in den unteren Kammerabschnitt. Vorzugsweise ist der Abstand kleiner oder gleich einer Längserstreckung des Endabschnitts.

Es wird als besonders vorteilhaft angesehen, wenn sich der Endabschnitt in der Schließposition zumindest bis zu der Abgabeöffnung erstreckt, vorzugsweise über die Abgabeöffnung hinaus erstreckt. Dadurch wird ein zuverlässiges Aufschmelzen von Medium bzw. ein zuverlässiges Bereitstellen von aufgeschmolzenem Medium im Bereich der Abgabeöffnung begünstigt.

Vorzugsweise weist der Schmelztank in die Schmelzkammer hineinragende Rippen auf, wobei die Rippen im Bereich des unteren Kammerabschnitts unterbrochen sind.

Es wird als vorteilhaft angesehen, wenn der Endabschnitt einen Hohlraum aufweist, insbesondere der Hohlraum von einer Außenseite des Schmelztanks aus zugänglich ist. Die Ausgestaltung des Endabschnitts mit einem Hohlraum hat den Vorteil, dass bei einem Einschalten des Schmelzgeräts besonders schnell die zum Aufschmelzen des Mediums notwendige Temperatur im Bereich des Endabschnitts erreicht wird, da eine geringere Menge von Material des Verschlusskörpers aufgeheizt werden muss. In dem Hohlraum kann beispielsweise auch Isolationsmaterial angeordnet werden, um Energieverluste durch Abstrahlung von Wärme in einen Außenbereich zu vermeiden. Um ein besonders schnelles und besonders zuverlässiges Aufheizen des Endabschnitts zu gewährleisten, ist es durchaus denkbar, in dem Bereich des Hohlraums eine Heizpatrone und/oder sonstige Heizmittel anzuordnen. Dadurch kann Wärme gezielt in den Bereich des unteren Kammerabschnitts eingebracht werden, insbesondere wenn sich der Endabschnitt bis zu der Abgabeöffnung oder darüber hinaus erstreckt. Der Hohlraum kann auch durchaus dazu dienen, einen Temperatursensor aufzunehmen, um unmittelbar im Bereich des unteren Kammerabschnitts die Temperatur zu messen. Dabei ist es durchaus denkbar, diesen Temperatursensor in einen Regelkreis zu integrieren, wobei erst bei ausreichender Temperatur im Bereich des Hohlkörpers bzw. des Endabschnitts die Fördereinrichtung, beispielsweise die Förderpumpe, gestartet wird bzw. gestartet werden kann. Ferner ist ein Hohlraum auch besonders materialsparend, sodass der Verschlusskörper ein besonders geringes Gewicht aufweist und somit besonders einfach zu handhaben und günstig herzustellen ist.

Es ist aber durchaus denkbar, dass der Verschlusskörper aus einem Vollmaterial besteht.

Vorzugsweise weist der Endabschnitt eine Wandstärke von 2 mm bis 5 mm auf. Es ist auch durchaus denkbar, dass der gesamte Verschlusskörper eine Wandstärke von 2 mm bis 5 mm aufweist. Vorzugweise weist der Endabschnitt, insbesondere der gesamte Verschlusskörper, eine konstante Wandstärke auf.

Vorzugsweise ist der Verschlusskörper in die Ablassöffnung, bevorzugt händisch, einsetzbar, insbesondere einsteckbar. Die Ablassöffnung und/oder der Verschlusskörper sind insbesondere zumindest im einem Bereich, der mit flüssigem Medium in Kontakt kommt, frei von Gewinden und/oder sonstigen Haltestrukturen. Derartige Gewinde oder Haltestrukturen haben den Nachteil, dass sich im Bereich der Gewindegänge bzw. im Bereich der Haltestrukturen aufgeschmolzenes Medium, insbesondere Klebstoff, festsetzt und gegebenenfalls aushärtet, wodurch die Funktion, insbesondere ein Entnehmen des Verschlusskörpers, beeinträchtigt werden kann. Auch wird eine Reinigung der Ablassöffnung und des Verschlusskörpers durch derartige Strukturen erschwert.

Um ein Ablassen des Mediums aus dem unteren Kammerabschnitt durch die Ablassöffnung zu erleichtern und insbesondere den Medienfluss beim Ablassen des Mediums aus der Ablassöffnung zu dosieren, wird es als vorteilhaft angesehen, wenn der Verschlusskörper einen Ablasskanal aufweist. Der Ablasskanal ist derart ausgebildet, dass in einer Ablassposition des Verschlusskörpers, typischerweise eine Position, in der der Verschlusskörper nur teilweise in der Ablassöffnung angeordnet ist, insbesondere, ausgehend von der Schließposition, teilweise aus der Ablassöffnung herausgezogen ist, ein Ende des Ablasskanals in den unteren Kammerabschnitt mündet und ein anderes Ende des Ablasskanals in einen Bereich außerhalb des Schmelztanks mündet. Vorzugsweise ist das andere Ende des Ablasskanals in der Schließposition innerhalb des Schmelztanks angeordnet. Somit kann in der Ablassposition aufgeschmolzener Klebstoff bzw. aufgeschmolzenes Medium durch den Ablasskanal hindurch in den Außenbereich des Schmelztanks gelangen zwecks Ablassens des aufgeschmolzenen Klebstoffs bzw. des aufgeschmolzenen Mediums.

Bei einem Ablassen des Klebstoffs bzw. des Mediums aus dem Schmelztank kann zunächst der Verschlusskörper in die Ablassposition überführt werden, um den aufgeschmolzenen Klebstoff bzw. das aufgeschmolzene Medium abzulassen. Wenn nur noch geringe Mengen durch den Ablasskanal herausfließen bzw. kein Medium mehr aus dem Ablasskanal herausfließt, kann der Verschlusskörper vollständig aus der Ablassöffnung herausgenommen werden, um Reinigungswerkzeuge oder Sonstiges in den unteren Kammerabschnitt einzuführen. Ein direktes, vollständiges Entnehmen des Verschlusskörpers aus der Ablassöffnung ist insbesondere dann problematisch, wenn sich noch relativ große Mengen von aufgeschmolzenem Medium in dem Schmelztank befinden, da dann in kurzer Zeit eine große Menge von aufgeschmolzenem Medium aus dem Ablasskanal austritt, sodass die Gefahr besteht, dass es zu unkontrolliertem Austritt von aufgeschmolzenem Medium kommt, wodurch, insbesondere bei einer manuellen Handhabung des Verschlusskörpers, für den Bediener die Gefahr von Verbrennungen durch Kontakt mit dem aufgeschmolzenen Medium besteht.

Alternativ oder zusätzlich kann auch die Ablassöffnung einen Ablasskanal aufweisen. Der Ablasskanal ist derart ausgebildet, dass der Verschlusskörper in der Schließposition den Ablasskanal verschließt und in einer Ablassposition des Verschlusskörpers, typischerweise eine Position, in der der Verschlusskörper nur teilweise in der Ablassöffnung angeordnet ist, insbesondere teilweise aus der Ablassöffnung herausgezogen ist, der Verschlusskörper den Ablasskanal freigibt.

Vorzugsweise ragt der Endabschnitt in der Ablassposition weiterhin in den unteren Kammerabschnitt hinein. Dadurch wird vermieden, dass es beim Ablassen des Mediums im Bereich des unteren Kammerabschnitts, der an die Ablassöffnung anschließt, zu einem unerwünschten Aushärten des Klebstoffs kommt, da der Endabschnitt weiterhin das zugängliche Volumen in diesem Bereich verkleinert und weiterhin zur Heizleistung beitragen kann. Dadurch wird eine Behinderung des Ablassens des Klebstoffs durch die Ablassöffnung vermieden.

Vorzugsweise weist der Verschlusskörper einen Kopfabschnitt und einen in axialer Richtung daran angrenzenden Schaftabschnitt auf, wobei der in den unteren Kammerabschnitt hineinragende Endabschnitt durch den Schaftabschnitt gebildet ist und der Kopfabschnitt in einer radialen Richtung gegenüber dem Schaftabschnitt hervorsteht.

Vorzugsweise weist der Verschlusskörper einen Anlageabschnitt auf, wobei der Verschlusskörper in der Schließposition mit dem Anlageabschnitt an dem Schmelztank flächig anliegt. Dadurch ist eine besonders gute Wärmeübertragung von dem Schmelztank, insbesondere einer Wandung des Schmelztanks, an den Verschlusskörper begünstigt. Um ein Lösen des Verschlusskörpers aus dem Schmelztank zu vereinfachen ist es durchaus denkbar, dass der Anlageabschnitt eine oder mehrere Ausformungen zum Einstecken eines Werkzeugs zwischen Anlageabschnitt und Schmelztank aufweist. Diese Ausformungen können beispielsweise als Taschen ausgebildet sein. Bei dem Werkzeug kann es sich beispielsweise um einen Schraubendreher handeln.

Es wird als vorteilhaft angesehen, wenn der Verschlusskörper einen an den Endabschnitt angrenzenden weiteren Abschnitt aufweist, wobei der weitere Abschnitt eine dem unteren Kammerabschnitt zugewandte Bodenfläche und eine an die Bodenfläche angrenzende Seitenfläche aufweist. Die Seitenfläche ist vorzugsweise als Mantelfläche ausgebildet.

Vorzugsweise ist der weitere Abschnitt im Wesentlichen topfförmig ausgebildet.

Es wird als vorteilhaft angesehen, wenn der weitere Abschnitt, bezogen auf eine Längsachse des Verschlusskörpers, in einer radialen Richtung gegenüber dem Endabschnitt hervorsteht.

In der Schließposition ist der weitere Abschnitt vorzugsweise in der Ablassöffnung angeordnet.

Der weitere Abschnitt weist in einer vorteilhaften Ausführungsform eine Führungsstruktur und der Schmelztank im Bereich der Ablassöffnung eine mit der Führungsstruktur zusammenwirkende Gegenstruktur auf. Die Führungsstruktur und die Gegenstruktur sind insbesondere parallel ausgebildet. Durch die Führungsstruktur und die Gegenstruktur ist ein Positionieren bzw. Ausrichten und ein Verschieben des Verschlusskörpers in der Ablassöffnung erleichtert, da die Führungsstruktur und die Gegenstruktur den Verschlusskörper in Längsrichtung führen.

Vorzugsweise hat der weitere Abschnitt einen radialen Vorsprung zum Positionieren einer Dichtung, insbesondere eines Dichtrings.

Vorzugsweise weist das Schmelzgerät eine im Bereich der Ablassöffnung angeordnete und mit dem Verschlusskörper zusammenwirkende Dichtung zum dichten Verschließen der Ablassöffnung auf. Die Dichtung ist insbesondere als Dichtring oder Flachdichtung ausgebildet. Vorzugsweise durchsetzt der Verschlusskörper den Dichtring bzw. die Flachdichtung, wobei der Verschlusskörper eine Dichtfläche aufweist, wobei die Dichtung sowohl in der Schließposition als auch in der Ablassposition die Dichtfläche kontaktiert. Dadurch wird sichergestellt, dass in der Ablassposition lediglich durch den Ablasskanal aufgeschmolzenes Medium austreten kann. Vorzugsweise bildet eine Seitenfläche des weiteren Abschnitts die Dichtfläche. Vorzugsweise wirkt die Dichtung als radiale Dichtung. Es ist aber auch denkbar, dass die Dichtung als axiale Dichtung wirkt.

Vorzugsweise ist die Dichtung von einer Schmelztankaußenseite in die Ablassöffnung einsetzbar. Es ist auch durchaus denkbar, dass die Dichtung zunächst am Verschlusskörper gelagert wird und gemeinsam mit dem Verschlusskörper in die Ablassöffnung eingesetzt wird.

Um ein Reinigen des unteren Kammerabschnitts und ein möglichst vollständiges Entfernen von aufgeschmolzenem Medium und etwaigen Verunreinigungen aus dem unteren Kammerabschnitt zu erleichtern, wird es als vorteilhaft angesehen, wenn die Ablassöffnung sich nach außen erweitert, insbesondere entlang einer oder mehrerer Stufen nach außen erweitert. Eine der Stufen kann durchaus als Anlagefläche für die Dichtung dienen.

Vorzugsweise weist der weitere Abschnitt des Verschlusskörpers eine dem unteren Kammerabschnitt zugewandte Bodenfläche und eine an die Bodenfläche angrenzende Seitenfläche auf, wobei der Ablasskanal sich von der Bodenfläche bis zu der Seitenfläche erstreckt. Der Ablasskanal ist insbesondere durch eine Vertiefung des weiteren Abschnitts, beispielsweise eine Ausnehmung oder einen Rücksprung oder eine Einprägung, gebildet. Die Seitenfläche ist vorzugsweise als Mantelfläche ausgebildet.

Bei im Bereich der Ablassöffnung ausgebildetem Ablasskanal kann dieser ebenfalls als Vertiefung, beispielsweise als Ausnehmung oder als Rücksprung oder als Einprägung, ausgebildet sein.

Hinsichtlich eines besonders einfachen Ablassens des aufgeschmolzenen Mediums aus der Ablassöffnung wird es als vorteilhaft angesehen, wenn das Schmelzgerät einen unterhalb der Ablassöffnung anordenbaren Leitkörper, beispielsweise ein Leitblech, zum Ableiten von aus der Ablassöffnung austretendem Material aufweist. Vorzugsweise ist der Leitkörper beheizbar und/oder der Leitkörper kontaktiert eine beheizte Wandung des Schmelztanks unmittelbar. Vorzugsweise ist der Leitkörper als Einsteckteil ausgebildet.

Der Leitkörper ist insbesondere aus einem Metall oder einer Metalllegierung gefertigt. Vorzugsweise ist der Leitkörper als Rinne ausgebildet.

Vorzugsweise weist der Verschlusskörper einen Verbindungsabschnitt, insbesondere einen Verbindungsflansch, auf, wobei der Verschlusskörper mittels separater Verbindungsmittel mit dem Schmelztank verbunden ist. Der Verbindungsabschnitt kann durchaus durch den Anlageabschnitt gebildet sein. Der Verbindungsflansch kann Öffnungen, beispielsweise Bohrungen, aufweisen, wobei die Verbindungsmittel diese Öffnungen durchsetzen. Bei den Verbindungsmitteln handelt es sich vorzugsweise um Schrauben, die in eine Wandung des Schmelztanks einschraubbar sind. Bei den Verbindungsmitteln kann es sich auch um mit dem Schmelztank verbundene Gewindestangen mit Muttern handeln, wobei die Gewindestangen den Verbindungsabschnitt durchsetzen.

Vorzugsweise weist das Schmelzgerät Führungsmittel auf zum axialen Führen des Verschlusskörpers beim Überführen des Verschlusskörpers von der Ablassposition in die Schließposition und umgekehrt.

Es ist durchaus denkbar, dass die Verbindungsmittel die Führungsmittel bilden. Es ist beispielsweise denkbar, dass die als Schrauben ausgebildeten Verbindungsmittel teilweise herausgeschraubt bzw. die Muttern gelöst werden, um ein Überführen des Verschlusskörpers von der Schließposition in die Ablassposition zu ermöglich. Das teilweise Herausschrauben/Lösen hat den Vorteil, dass die Schrauben bzw. Gewindestangen zum einen eine Führung für den Verschlusskörper zwecks Überführen von der Schließposition in die Ablassposition bilden. Zudem bilden die teilweise herausgeschraubten Schrauben bzw. die teilweise gelösten Muttern auch einen Anschlag für den Verschlusskörper, sodass die Position des Verschlusskörpers besonders fein eingestellt werden kann und ein ungewolltes vollständiges Lösen des Verschlusskörpers aus der Ablassöffnung vermieden wird.

Die Ablassöffnung und/oder der Endabschnitt sind vorzugsweise koaxial zu einer Längsachse des unteren Kammerabschnitts ausgebildet. Der untere Kammerabschnitt ist insbesondere frei von Vorsprüngen und Hinterschnitten.

Es wird als besonders vorteilhaft angesehen, wenn die Gesamtheit von unterem Kammerabschnitt und Ablassöffnung zumindest im an die Bodenfläche angrenzenden Teil einen konstanten Querschnitt oder einen sich in Richtung der Ablassöffnung erweiternden Querschnitt aufweist. Die Erweiterung des Querschnitts kann durchaus entlang einer oder mehrerer Stufen erfolgen.

Eine Bodenfläche des unteren Kammerabschnitts ist insbesondere frei von Vorsprüngen oder Vertiefungen.

Der Verschlusskörper und/oder der Schmelztank sind vorzugsweise einteilig ausgebildet.

Der Verschlusskörper ist vorzugsweise geschmiedet, insbesondere aus einer Aluminiumlegierung geschmiedet.

Bei dem Verschlusskörper kann es sich aber auch durchaus um ein Tiefziehteil handeln.

Vorzugsweise handelt es sich bei dem Schmelztank um ein Gussteil, insbesondere um ein Aluminiumgussteil. Eine Bildung des unteren Kammerabschnitts und der in den unteren Kammerabschnitt mündenden Ablassöffnung erfolgt vorzugsweise durch Verwendung eines Gusskerns beim Gießprozess des Schmelztanks.

Bei dem Schmelztank bzw. dem Verfahren zu dessen Herstellung handelt es sich insbesondere um einen Kokillenguss bzw. ein Kokillengießverfahren. Bei dem Material des Schmelztanks handelt es sich insbesondere um Aluminium oder um eine Aluminiumlegierung.

Die Ablassöffnung hat sich auch bei einem Gießverfahren zur Herstellung des Schmelztanks als besonders vorteilhaft erwiesen, da die Ablassöffnung besonders einfach ein Entfernen des Gusskerns, der zur Bildung des unteren Kammerabschnitts verwendet werden kann, ermöglicht. Bei der Herstellung des Schmelztanks kann zur Bildung der Ablassöffnung und des unteren Kammerabschnitts durchaus ein Sandkern, ein Salzkern oder ein Metallkern zum Einsatz kommen. Vorzugsweise kommt ein Metallkern zum Einsatz, insbesondere ein Metallkern, der nach dem Aushärten des Schmelztanks und vor dem Öffnen der Form durch die Ablassöffnung entfernt, insbesondere gezogen wird.

Der Tank ist bevorzugt zumindest innenseitig beschichtet, vorzugsweise mit einer FEP (Tetrafluorethylen-Hexafluorpropylen-Copolymer)-Beschichtung beschichtet.

Vorzugsweise ist der Schmelztank umlaufend mit einem Isolationsmaterial ummantelt. Bei dem Isolationsmaterial handelt es sich insbesondere um Steinwolle oder ein Isolationsmaterial, das ein Aerogel beinhaltet. Vorzugsweise ist die Ummantelung zwischen 10 mm und 30 mm stark.

Vorzugsweise ist der Verschlusskörper innerhalb der Ummantelung angeordnet.

Der untere Kammerabschnitt weist vorzugsweise eine glatte und/oder verrundete Seiten- und Bodenfläche auf.

Vorzugsweise weist das Schmelzgerät ein Gehäuse auf, wobei der Schmelztank innerhalb des Gehäuses ausgebildet ist.

Um dem Schmelzgerät, nämlich dem Schmelztank, das aufzuschmelzende Medium zuzuführen, weist das Schmelzgerät bevorzugt eine Einfüllöffnung auf. Über diese Einfüllöffnung wird das Medium in fester Form dem Schmelztank zugeführt. Dies kann manuell erfolgen.

Das erfindungsgemäße Schmelzgeräte kann durchaus Bestandteil von einem anderen Gerät oder einer Anlage sein.

Das erfindungsgemäße Schmelzgerät kann durchaus auch weitere Komponenten, wie beispielsweise eine Fördereinrichtung, insbesondere eine Förderpumpe, zum Fördern des aufgeschmolzenen Mediums aufweisen. Ferner kann das Schmelzgerät auch einen Verteiler zum Ausgeben von geschmolzenem Medium in mindestens eine an den Verteiler anschließbare Leitung aufweisen.

In den nachfolgenden Figuren ist die Erfindung anhand von einem Ausführungsbeispiel näher dargestellt, ohne auf dieses beschränkt zu sein.

Es zeigen:
- Fig. 1: ein Schmelzgerät in einer perspektivischen Ansicht,
- Fig. 2: eine Anordnung von einem Schmelztank und einer Fördereinrichtung des Schmelzgeräts gemäß Fig. 1 in einer perspektivischen Ansicht,
- Fig. 3: die Anordnung gemäß Fig. 2 in einer weiteren perspektivischen Ansicht,
- Fig. 4: die Anordnung gemäß Fig. 2 in einer Schnittansicht,
- Fig. 5: die Anordnung gemäß Fig. 2 in einer weiteren Schnittansicht,
- Fig. 6: eine Anordnung des Schmelztanks gemäß Fig. 2 und eines Verschlusskörpers in einer Schließposition in einer Schnittansicht,
- Fig. 7: die Anordnung gemäß Fig. 6 mit dem Verschlusskörper in einer Ablassposition in einer Schnittansicht,
- Fig. 8: die Anordnung gemäß Fig. 6 ohne Verschlusskörper,
- Fig. 9: ein Teilbereich der Fig. 7,
- Fig. 10: die Anordnung gemäß Fig. 2 mit dem Verschlusskörper in der Ablassposition,
- Fig. 11: der Schmelztank gemäß Fig. 12 in einer Ansicht gemäß dem Pfeil XI in Fig. 12,
- Fig. 12: der Schmelztank in einer Schnittansicht gemäß den Pfeilen XII-XII in Fig. 11,
- Fig. 13: der Verschlusskörper in einer Ansicht gemäß dem Pfeil XIII in Fig. 16,
- Fig. 14: der Verschlusskörper gemäß Fig. 13 in einer perspektivischen Ansicht,
- Fig. 15: der Verschlusskörper gemäß Fig. 13 in einer weiteren perspektivischen Ansicht,
- Fig. 16: der Verschlusskörper in einer Ansicht gemäß dem Pfeil XVI in Fig. 13,
- Fig. 17: der Verschlusskörper in einer Ansicht gemäß dem Pfeil XVII in Fig. 18,
- Fig. 18: der Verschlusskörper in einer Schnittansicht gemäß der Linie XVIII-XVIII in Fig. 17.

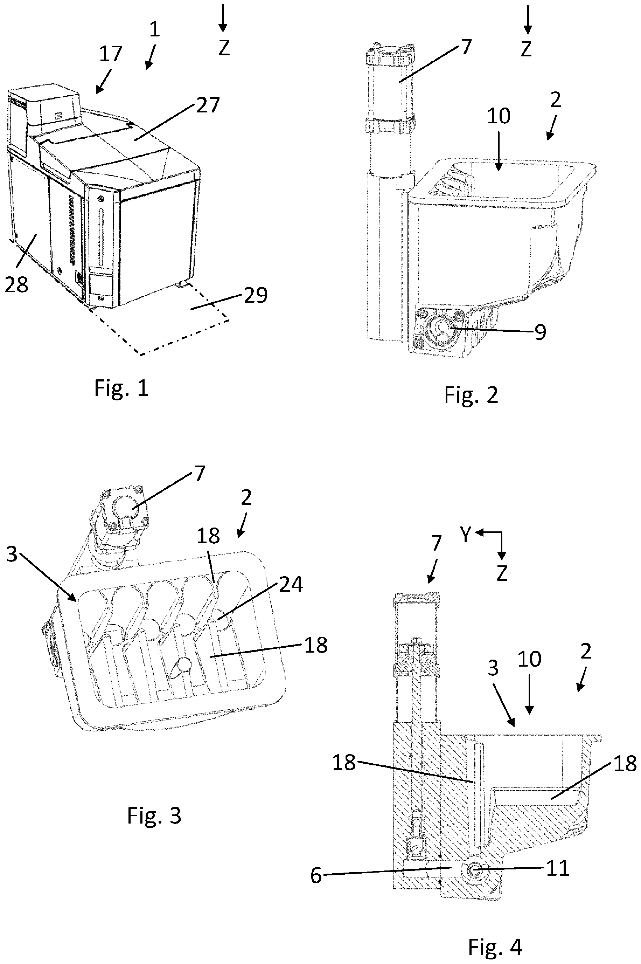

Die Fig. 1 zeigt ein Schmelzgerät 1 zum Bereitstellen eines aufgeschmolzenen Mediums, vorliegend zum Bereitstellen eines aufgeschmolzenen Klebstoffs. Das Schmelzgerät 1 weist einen innerhalb eines Gehäuses 17 angeordneten Schmelztank 2 und eine Fördereinrichtung 7 zum Fördern des aufgeschmolzenen Klebstoffs auf. Der Schmelztank 2 weist eine Schmelzkammer 3 zum Aufnehmen und Aufschmelzen des aufzuschmelzenden Klebstoffs auf. Zu diesem Zweck kann die Schmelzkammer 3 mit festem Klebstoff beschickt werden, wobei dieser feste Klebstoff beispielsweise in Form von Klebstoffgranulat und/oder Klebstoffpellets vorliegen kann.

Das Befüllen des Schmelztanks 2, genauer gesagt, der Schmelzkammer 3 des Schmelztanks 2, erfolgt durch eine im oberen Bereich des Schmelztanks 2 ausgebildete Einfüllöffnung 10, wobei vorliegend das Befüllen des Schmelztanks 2 in Z-Richtung erfolgt. Das Befüllen des Schmelztanks 2 erfolgt vorzugsweise händisch. Es ist aber auch durchaus denkbar, dass das Befüllen des Schmelztanks 2 automatisiert erfolgt. Bei der vorliegenden Ausführungsform ist die Einfüllöffnung 10 des Schmelztanks 2 durch einen Deckel 27 des Gehäuses 17 verschlossen. Dieser Deckel 27 kann zwecks Befüllens des Schmelztanks 2 geöffnet werden.

Vorliegend ist der Schmelztank 2 einteilig und als Aluminium-Gussteil ausgebildet, wobei Wandungen 12 des Schmelztanks 2 die Schmelzkammer 3 begrenzen. Das Schmelzgerät 1 weist eine nicht näher dargestellte Heizeinrichtung zum Beheizen der Schmelzkammer 3 auf. Die Heizeinrichtung kann beispielsweise als elektrische Heizeinrichtung ausgebildet sein. Vorzugsweise ist die Heizeinrichtung derart gestaltet, dass diese Heizeinrichtung Heizelemente, insbesondere Heizdrähte, aufweist, die außenseitig an den Wandungen 12 des Schmelztanks 2 anliegen. Insbesondere weisen die Wandungen 12 Aufnahmen auf, in denen die Heizelemente angeordnet sind. Dementsprechend erfolgt das Aufheizen der Schmelzkammer 3 und des darin befindlichen aufzuschmelzenden Klebstoffs vorliegend über die beheizten Wandungen 12 des Schmelztanks 2, wobei zwecks besserer Wärmeübertragung und schnelleren Aufheizens des Klebstoffs der Schmelztank 2 mehrere Rippen 18 aufweist, die in die Schmelzkammer 3 hineinragen.

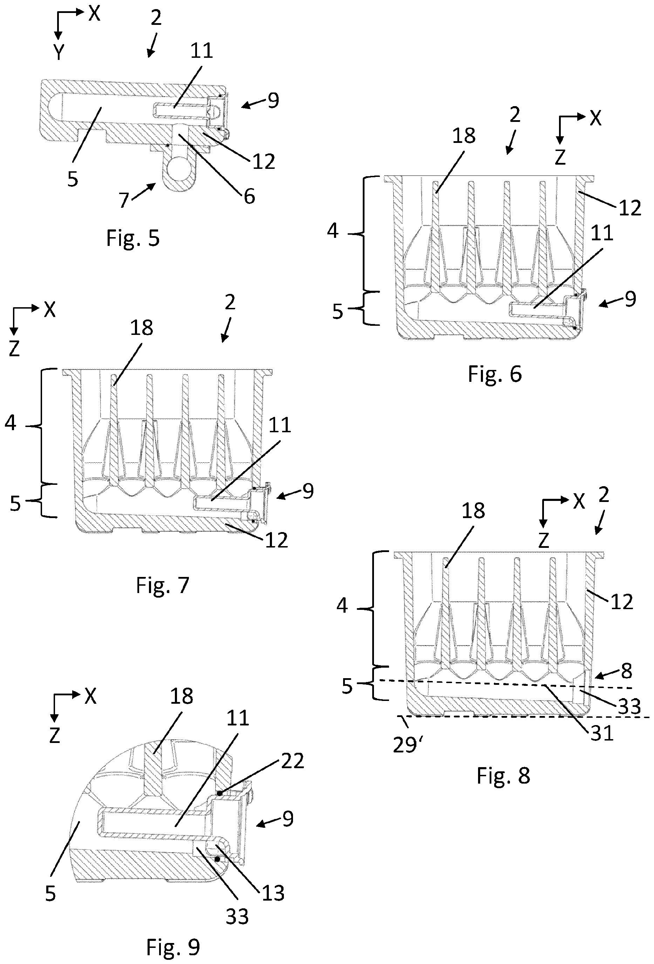

Wie insbesondere in den Fig. 6 bis 8 kenntlich gemacht, weist die Schmelzkammer 3 einen oberen Kammerabschnitt 4 und einen in Z-Richtung an den oberen Kammerabschnitt 4 anschließenden unteren Kammerabschnitt 5 auf, wobei die beiden Kammerabschnitte 4, 5 durch Durchtrittsöffnungen 24 miteinander fluidverbunden sind. Der untere Kammerabschnitt 5 weist vorliegend ein sehr viel kleineres Volumen als der obere Kammerabschnitt 4 auf.

Der Schmelztank 2 weist eine Abgabeöffnung 6 und eine Ablassöffnung 8 auf, wobei die Abgabeöffnung 6 vorliegend als Ansaugkanal ausgebildet ist und einen kleineren Querschnitt als die Ablassöffnung 8 aufweist. Die Abgabeöffnung 6 ist mit der Fördereinrichtung 7 zum Fördern des aufgeschmolzenen Mediums fluidverbunden. Durch die Abgabeöffnung 6 kann somit mittels der Fördereinrichtung 7 aufgeschmolzener Klebstoff angesaugt und zu einem Verbraucher, beispielsweise einer Abgabeeinrichtung, insbesondere einem Auftragskopf, gefördert werden. Die Ablassöffnung 8 dient insbesondere dem Entleeren der Schmelzkammer 3 und ist zu diesem Zweck am tiefsten Punkt der Schmelzkammer 3 bzw. am tiefsten Punkt des unteren Kammerabschnitts 5 ausgebildet.

Sowohl die Abgabeöffnung 6 als auch die Ablassöffnung 8 münden in den unteren Kammerabschnitt 5. Zum Verschließen der Ablassöffnung 8, welche im Normalbetrieb des Schmelzgeräts 1 verschlossen ist, weist das Schmelzgerät 1 einen Verschlusskörper 9 zum Verschließen der Ablassöffnung 8 auf. In einer Schließposition, welche beispielsweise in der Fig. 6 dargestellt ist, verschließt der Verschlusskörper 9 die Ablassöffnung 8.

Vorliegend münden die Abgabeöffnung 6 und die Ablassöffnung 8 an unterschiedlichen Seiten in den unteren Kammerabschnitt 5, wobei die beiden Seiten bzw. die Abgabeöffnung 6 und die Ablassöffnung 8 einen Winkel von 90° einschließen. Vorliegend mündet die Ablassöffnung 8 in einer Längsrichtung des unteren Kammerabschnitts 5 in den unteren Kammerabschnitt 5. Die Abgabeöffnung 6 hingegen mündet seitlich in den unteren Kammerabschnitt 5. Eine Bodenfläche des unteren Kammerabschnitts 5 ist frei von irgendwelchen Öffnungen.

Wie insbesondere den Fig. 5 und 6 zu entnehmen ist, weist der Verschlusskörper 9 einen Endabschnitt 11 auf, wobei dieser Endabschnitt 11 in den unteren Kammerabschnitt 5 hineinragt, wobei sich der Endabschnitt 11 in der Schließposition über die Abgabeöffnung 6 hinaus erstreckt.

Vorliegend ist der untere Kammerabschnitt 5 als Kanal ausgebildet, wobei der Kanal vorliegend im Wesentlichen kreiszylindrisch ausgebildet ist, wobei ein der Ablassöffnung 8 abgewandtes Ende des Kanals verrundet ist. Der Endabschnitt 11 des Verschlusskörpers 9 ist ebenfalls im Wesentlichen kreiszylindrisch ausgebildet. Der Endabschnitt 11 weist eine Längsachse 30 auf, wobei in der Schließposition die Längsachse 30 des Endabschnitts 11 und eine Längsachse 31 des unteren Kammerabschnitts 5 zusammenfallen, somit der Endabschnitt 11 und der untere Kammerabschnitt 5 in der Schließposition des Verschlusskörpers 9 konzentrisch angeordnet sind.

Vorliegend weist die Gesamtheit von unterem Kammerabschnitt 5 und Ablassöffnung 8 einen sich in Richtung der Ablassöffnung 8 erweiternden Querschnitt auf, wobei die Erweiterung des Querschnitts im Bereich der Ablassöffnung 8 entlang von zwei Stufen erfolgt. Der Verschlusskörper 9 weist zu diesen Stufen korrespondierende Gegenstrukturen auf, wobei diese Gegenstrukturen im Bereich eines an den Endabschnitt 11 angrenzenden weiteren Abschnitts 19 ausgebildet sind. Der weitere Abschnitt 19 ist im Wesentlichen topfförmig ausgebildet und weist eine dem unteren Kammerabschnitt 5 zugewandte bzw. zuzuwendende Bodenfläche 14 und eine an die Bodenfläche 14 angrenzende, umlaufende Seitenfläche 15 auf. Die Dichtung 22 ist als Dichtring ausgebildet, wobei der Verschlusskörper 9 den Dichtring durchsetzt. Die Dichtung 22 ist vorliegend in der radialen Richtung gepresst und wirkt somit als radiale Dichtung. Der weitere Abschnitt 19 weist einen radialen Vorsprung in Form einer Stufe auf, wobei diese Stufe dazu dient, die Dichtung 22 zu positionieren.

In der Schließposition ist der Endabschnitt 11 von Wandungen 12 des Schmelztanks 2, die den unteren Kammerabschnitt 5 begrenzen, und den Rippen 18 des Schmelztanks 2 beabstandet. Vorliegend ist der Endabschnitt 11 in der Schließposition von sämtlichen Strukturen des Schmelztanks 2 beabstandet. Dadurch wird eine Beschädigung des Schmelztanks 2, beispielsweise eine Beschädigung einer innenseitig auf die Wandung 12 und die Rippen 18 aufgebrachten Beschichtung 25 vermieden.

Um eine gute Wärmeleitung des Verschlusskörpers 9 zu gewährleisten, ist der Verschlusskörper 9 vorliegend einteilig und aus einem Metall gefertigt. Vorliegend handelt es sich bei dem Verschlusskörper 9 um ein Schmiedeteil aus einer Aluminiumlegierung.

Der Verschlusskörper 9 weist einen Anlageabschnitt 20 auf, wobei der weitere Abschnitt 19 zwischen dem Endabschnitt 11 und dem Anlageabschnitt 20 ausgebildet ist. Der Verschlusskörper 9 liegt in der Schließposition mit dem Anlageabschnitt 20 an dem Schmelztank 2, nämlich einer seitlichen Wandung 12 des Schmelztanks 2, unmittelbar und flächig an. Dadurch ist eine besonders gute Wärmeübertragung der beheizten Wandung 12 des Schmelztanks 2 auf den Verschlusskörper 9 und somit auf den Endabschnitt 11 gewährleistet. Der Anlageabschnitt 20 weist vorliegend drei Bohrungen 21 auf, wobei die Bohrungen 21 der Aufnahme von Verbindungsmitteln 32, vorliegend von Schrauben, dienen. Die Schrauben sind in die Wandung 12 des Schmelztanks 2 einschraubbar.

Vorliegend ist der untere Kammerabschnitt 5 abgesehen von den Endabschnitt 11 des Verschlusskörpers 9 frei von Einbauten und frei von in den unteren Kammerabschnitt 5 hineinragenden Strukturen. Insbesondere sind die Rippen 18 des Schmelztanks 2 im Bereich des unteren Kammerabschnitts 5 unterbrochen und somit nur im oberen Kammerabschnitt 4 ausgebildet.

Wie insbesondere der Fig. 8 und der in der Fig. 8 eingezeichneten Längsachse 31 des unteren Kammerabschnitts 5 zu entnehmen ist, weist der Schmelztank 2 eine in Richtung der Ablassöffnung 8 abfallende Bodenfläche auf. Konkret ist der gesamte untere Kammerabschnitt 5 zu einer Aufstellebene 29 des Schmelzgeräts 1 bzw. zu einer in der Fig. 8 gezeigten zu der Aufstellebene 29 parallelen Ebene 29` geneigt ausgebildet, wobei vorliegend die Neigung etwa 2° beträgt.

Wie insbesondere der Fig. 5 zu entnehmen ist, weist der untere Kammerabschnitt 5 eine Längserstreckung und der Endabschnitt 11 des Verschlusskörpers eine Längserstreckung auf, wobei ein Verhältnis der Längserstreckung des Endabschnitts 11 zu der Längserstreckung des unteren Kammerabschnitts 5 etwa 0,35 beträgt.

Vorliegend beträgt ein Verhältnis eines Durchmessers des Endabschnitts 11 zu einem Durchmesser des unteren Kammerabschnitts 5 etwa 0,5. Im Ansaugbereich der Fördereinrichtung 7, somit in einem an die Abgabeöffnung 6 angrenzenden Bereich des unteren Kammerabschnitts 5, ist somit durch den Endabschnitt 11 das Volumen des Klebstoffs erheblich verkleinert, sodass ein besonders schnelles Aufheizen und somit Verflüssigen des Klebstoffs in diesem Bereich erzielt werden kann.

Um aufgeschmolzenen Klebstoff aus der Ablassöffnung 8 abzulassen, ohne den Verschlusskörper 9 vollständig aus der Ablassöffnung 8 zu entfernen, weist der Verschlusskörper 9 einen Ablasskanal 13 auf, wobei in einer Ablassposition des Verschlusskörpers 9 ein Ende des Ablasskanals 13 in den unteren Kammerabschnitt 5 mündet und ein anderes Ende des Ablasskanals 13 in einen Bereich außerhalb des Schmelztanks 2 mündet. Die Ablassposition des Verschlusskörpers 9 ist in den Fig. 7, 9 und 10 näher dargestellt. In dieser Ablassposition ist der Verschlusskörper 9 teilweise aus der Ablassöffnung 8 herausgezogen und ermöglicht auf diese Weise durch den Ablasskanal 13 aufgeschmolzenen Klebstoff langsam abzulassen, da eine kleine definierte Öffnung, nämlich der Ablasskanal 13, freigegeben wird. Hingegen ist in der Schließposition das andere Ende des Ablasskanals 13 innerhalb des Schmelztanks 2 angeordnet, sodass kein Klebstoff durch den Ablasskanal 13 austreten kann. Ein vollständiges Entfernen des Verschlusskörpers 9 kann erfolgen, wenn der Klebstoffabfluss durch den Ablasskanal 13 versiegt. Dann besteht nicht mehr die Gefahr eine Verbrennung bzw. Verbrühung des Bedienpersonals bei vollständigem Entfernen des Verschlusskörpers 9.

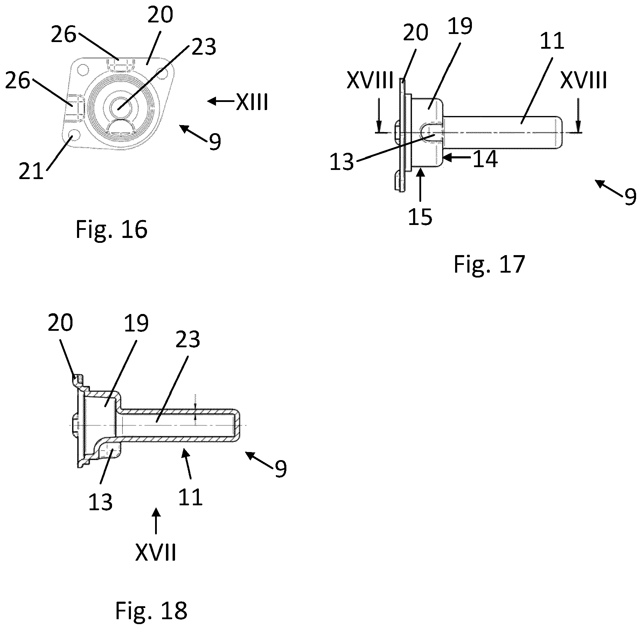

Wie insbesondere den Fig. 17 und 18 zu entnehmen ist, ist der Ablasskanal 13 vorliegend durch eine Vertiefung im Bereich des weiteren Abschnitts 19 gebildet.

Die Ablassposition ist auch dahingehend als vorteilhaft anzusehen, dass der Endabschnitt 11 in der Ablassposition weiterhin in den unteren Kammerabschnitt 5 hineinragt und so weiterhin das Volumen des unteren Kammerabschnitts 5, welches für Klebstoff zugänglich ist, verkleinert und ferner weiterhin zur Heizleistung bzw. zum Aufheizen des Klebstoffs in diesem Bereich beiträgt. Dabei ist es vorteilhaft, dass auch der weitere Abschnitt 19 gut die Wärme überträgt und die beheizte Wandung 12 in der Ablassposition kontaktiert oder zumindest nur geringfügig von dieser beabstandet ist. Dadurch wird vermieden, dass es beim Ablassen des Klebstoffs im Bereich des unteren Kammerabschnitts 5, der an die Ablassöffnung 8 anschließt, zu einem unerwünschten Aushärten des Klebstoffs kommt. Dadurch wird eine Behinderung des Ablassens des Klebstoffs durch die Ablassöffnung 8 vermieden.

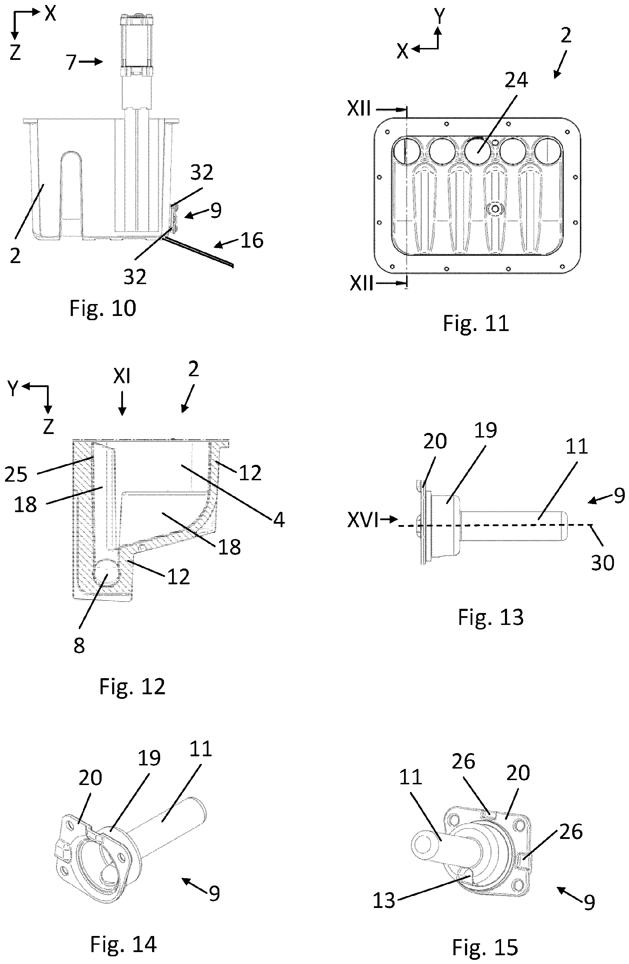

In der Fig. 10 ist der Vorgang des Ablassens des Klebstoffs mit dem Verschlusskörper 9 in der Ablassposition näher dargestellt. Unterhalb der Ablassöffnung 8 ist ein Leitkörper 16 in Form eines Leitblechs angeordnet, das dem Ableiten von aus der Ablassöffnung 8 austretendem Material dient. Der Leitkörper 16 ist vorliegend aus einem Metall gefertigt und kontaktiert eine Wandung 12 des Schmelztanks 2 unmittelbar. Durch diese unmittelbare Kontaktierung und die gute Wärmeleitfähigkeit des Metalls des Leitkörpers 16 wird der Leitkörper 16 mit beheizt, sodass ein Aushärten von Klebstoff auf dem Leitkörper 16 vermieden wird.

Um ein Überführen des Verschlusskörpers 9 von der Schließposition in die Ablassposition und umgekehrt zu ermöglichen und um zu vermeiden, dass der Verschlusskörper 9 bei diesem Überführen vollständig aus der Ablassöffnung 8 herausgezogen wird, können die Verbindungsmittel 32 teilweise aus der Wandung 12 des Schmelztanks 2 herausgeschraubt werden. In dieser herausgeschraubten Position kann der Verschlusskörper 9 aus der Ablassöffnung 8 teilweise herausgezogen werden, um diesen von der Schließposition in die Ablassposition zu überführen, ohne dass die Gefahr besteht, dass sich der Verschlusskörper 9 vollständig aus der Ablassöffnung 8 löst und Klebstoff unkontrolliert aus der Ablassöffnung 8 austritt. Um das Herausziehen des Verschlusskörpers 9 aus der Ablassöffnung 8 zu erleichtern, weist der Verschlusskörper 9 im Bereich des Anlageabschnitts 20 ausgebildete Ausformungen 26 zum Einstecken eines Werkzeugs zwischen Anlageabschnitt 20 und Schmelztank 2 auf. Beispielsweise kann ein Schraubendreher in die taschenförmigen Ausformungen 26 eingesteckt werden und der Verschlusskörper dann mittels des Schraubendrehers aus der Ablassöffnung 8 herausgehebelt werden.

Die Dichtung 22 kontaktiert sowohl in der Schließposition als auch in der Ablassposition die Seitenfläche 15 des Verschlusskörpers 9. Dadurch wird sichergestellt, dass in der Ablassposition lediglich durch den Ablasskanal 13 aufgeschmolzenes Medium austreten kann.

Der Verschlusskörper 9 ist als Hohlkörper ausgebildet, wobei der Endabschnitt 11 einen Hohlraum 23 aufweist, wobei der Hohlraum 23 von einer Außenseite des Schmelztanks 2 aus zugänglich ist.

Die Seitenflächen 15 des weiteren Abschnitts 19 bildet vorliegend auch eine Führungsstruktur, die in der Schließposition und der Ablassposition im Bereich der Ablassöffnung 8 angeordnet ist. Diese Führungsstruktur wirkt mit einer korrespondierenden Gegenstruktur 33, die im Bereich der Ablassöffnung 8 ausgebildet ist, zusammen und dient dem axialen Führen des Verschlusskörpers 9 in Längsrichtung 31 des unteren Kammerabschnitts 5. Dadurch wird das Einsetzen des Verschlusskörpers 9 in den unteren Kammerabschnitt 5 bzw. die Ablassöffnung 8 erleichtert und vermieden, dass insbesondere der Endabschnitt 11 beim Vorgang des Einführens des Verschlusskörpers 9 Wandungen 12 und/oder Rippen 18 des Schmelztanks 2 kontaktiert.

Der Verschlusskörper 9 ist für den Verwender des Schmelzgeräts 1 von außen gut zugänglich, wobei, um Zugang zu dem Verschlusskörper 9 zu erhalten, eine Klappe 28 des Gehäuses 17 geöffnet werden muss.

Der Schmelztank 2 inklusive Verschlusskörper 9 ist mit einem nicht näher dargestellten Isolationsmaterial ummantelt, wobei es sich bei diesem Isolationsmaterial beispielsweise um eine Isolationsmatte handelt, die Steinwolle enthalten kann. Die Isolationsmatte kann insbesondere in einem an die Klappe 28 angrenzenden Bereich des Schmelztanks 2 geöffnet und/oder von dem Schmelztank 2 gelöst werden, um Zugang zu dem Verschlusskörper 9 zu erhalten. Dadurch ist der Verschlusskörper 9 besonders einfach und gut zugänglich und ein Ablassen des Klebstoffs aus dem Schmelztank 2 ist unproblematisch möglich.

Der Verschlusskörper 9 kann vorliegend vollständig aus dem Schmelztank 2 entfernt werden. Bei vollständig entferntem Verschlusskörper 9 ist der untere Kammerabschnitt 5 besonders einfach und gut zugänglich, insbesondere für Werkzeuge zwecks Reinigung und/oder vollständiger Entleerung des unteren Kammerabschnitts 5. Bei den Werkzeugen kann es sich beispielsweise um Schaber, Bürsten oder Ähnliches handeln, wobei diese Werkzeuge vorzugsweise an den Querschnitt des unteren Kammerabschnitts 5 angepasst sind.

Vorzugsweise handelt es sich bei dem Schmelztank 2 um ein Gussteil, wobei eine Bildung des unteren Kammerabschnitts 5 und der in den unteren Kammerabschnitt 5 mündenden Ablassöffnung 8 durch Verwendung eines Kerns erfolgt ist. Dadurch, dass der Kern durch die Ablassöffnung 8 entfernt werden kann, ist die Herstellung des Gussteils und insbesondere des unteren Kammerabschnitts 5 mit Ablassöffnung 8 besonders einfach möglich. Die Herstellung des Schmelztanks 2 erfolgt vorzugsweise mittels eines Kokillengießverfahrens.

### Bezugszeichenliste

- 1: Schmelzgerät
- 2: Schmelztank
- 3: Schmelzkammer
- 4: oberer Kammerabschnitt
- 5: unterer Kammerabschnitt
- 6: Abgabeöffnung
- 7: Fördereinrichtung
- 8: Ablassöffnung
- 9: Verschlusskörper
- 10: Einfüllöffnung
- 11: Endabschnitt
- 12: Wandung
- 13: Ablasskanal
- 14: Bodenfläche
- 15: Seitenfläche
- 16: Leitkörper
- 17: Gehäuse
- 18: Rippe
- 19: weiterer Abschnitt
- 20: Anlageabschnitt
- 21: Bohrung
- 22: Dichtung
- 23: Hohlraum
- 24: Durchtrittsöffnung
- 25: Beschichtung
- 26: Ausformung
- 27: Deckel
- 28: Klappe
- 29: Aufstellebene
- 29': Ebene
- 30: Längsachse des Endabschnitts
- 31: Längsachse des unteren Kammerabschnitts
- 32: Verbindungsmittel
- 33: Gegenstruktur

## Patentansprüche

1. Schmelzgerät (1) zum Bereitstellen eines aufgeschmolzenen Mediums, insbesondere zum Bereitstellen eines aufgeschmolzenen Klebstoffs, aufweisend einen Schmelztank (2), wobei der Schmelztank (2) eine Schmelzkammer (3) zum Aufnehmen und Aufschmelzen des aufzuschmelzenden Mediums aufweist, wobei das Schmelzgerät (1) eine Heizeinrichtung zum Beheizen der Schmelzkammer (3) aufweist, wobei die Schmelzkammer (3) einen oberen Kammerabschnitt (4) und einen unteren Kammerabschnitt (5) aufweist, wobei der Schmelztank (2) eine Abgabeöffnung (6) aufweist, wobei die Abgabeöffnung (6) mit einer Fördereinrichtung (7) zum Fördern von aufgeschmolzenem Medium fluidverbindbar ist, wobei der Schmelztank (2) eine Ablassöffnung (8) aufweist, wobei die Abgabeöffnung (6) und die Ablassöffnung (8) in den unteren Kammerabschnitt (5) münden, wobei das Schmelzgerät (1) einen Verschlusskörper (9) zum Verschließen der Ablassöffnung (8) aufweist, wobei in einer Schließposition des Verschlusskörpers (9), in der der Verschlusskörper (9) die Ablassöffnung (8) verschließt, ein Endabschnitt (11) des Verschlusskörpers (9) in den unteren Kammerabschnitt (5) hineinragt.

2. Schmelzgerät (1) nach Anspruch 1, wobei in der Schließposition des Verschlusskörpers (9) der Endabschnitt (11) von Wandungen (12) des Schmelztanks (2), die den unteren Kammerabschnitt (5) begrenzen, und/oder Rippen (18) des Schmelztanks (2) beabstandet ist.

3. Schmelzgerät (1) nach Anspruch 1 oder 2, wobei der Endabschnitt (11), insbesondere der Verschlusskörper (9), aus Metall und/oder einer Legierung besteht, vorzugsweise der Verschlusskörper (9) eine Wandung (12) des Schmelztanks (2) unmittelbar kontaktiert.

4. Schmelzgerät (1) nach einem der Ansprüche 1 bis 3, wobei der untere Kammerabschnitt (5) abgesehen von dem Endabschnitt (11) des Verschlusskörpers (9) frei von Einbauten und/oder frei von in den unteren Kammerabschnitt (5) hineinragenden Strukturen ist, insbesondere frei von Rippen (18) ist.

5. Schmelzgerät (1) nach einem der Ansprüche 1 bis 4, wobei der untere Kammerabschnitt (5) als in Richtung des oberen Kammerabschnitts (4) offener Kanal ausgebildet ist, wobei die Ablassöffnung (8) an einem Ende des Kanals in den Kanal mündet.

6. Schmelzgerät (1) nach einem der Ansprüche 1 bis 5, wobei der untere Kammerabschnitt (5) eine Längserstreckung aufweist, wobei der Endabschnitt (11) des Verschlusskörpers (9) eine Längserstreckung aufweist, wobei die Längserstreckung des Endabschnitts (11) des Verschlusskörpers (9) zwischen 10% und 90%, bevorzugt zwischen 20% und 80%, besonders bevorzugt zwischen 20% und 60%, insbesondere zwischen 25% und 50%, der Längserstreckung des unteren Kammerabschnitts (5) beträgt.

7. Schmelzgerät (1) nach einem der Ansprüche 1 bis 6, wobei in der Schließposition in einem Bereich, in dem der Endabschnitt (11) angeordnet ist, der untere Kammerabschnitt (5) eine Quererstreckung und der Endabschnitt (11) des Verschlusskörpers (9) eine Quererstreckung aufweisen, wobei die Quererstreckung des Endabschnitts (11) des Verschlusskörpers (9) zwischen 10% und 90%, bevorzugt zwischen 20% und 80%, besonders bevorzugt zwischen 35% und 60%, insbesondere zwischen 40% und 55%, der Quererstreckung des unteren Kammerabschnitts (5) beträgt.

8. Schmelzgerät (1) nach einem der Ansprüche 1 bis 7, wobei die Abgabeöffnung (6) und die Ablassöffnung (8) an unterschiedlichen Seiten in den unteren Kammerabschnitt (5) münden.

9. Schmelzgerät (1) nach einem der Ansprüche 1 bis 8, wobei der Endabschnitt (11) sich in der Schließposition zumindest bis zu der Abgabeöffnung (6) erstreckt, vorzugsweise über die Abgabeöffnung (6) hinaus erstreckt.

10. Schmelzgerät (1) nach einem der Ansprüche 1 bis 9, wobei der Schmelztank (2) in die Schmelzkammer (3) hineinragende Rippen (18) aufweist, wobei die Rippen (18) im Bereich des unteren Kammerabschnitts (5) unterbrochen sind.

11. Schmelzgerät (1) nach einem der Ansprüche 1 bis 10, wobei der Endabschnitt (11) einen Hohlraum (23) aufweist, insbesondere der Hohlraum (23) von einer Außenseite des Schmelztanks (2) aus zugänglich ist.

12. Schmelzgerät (1) nach einem der Ansprüche 1 bis 11, wobei der Verschlusskörper (9) einen Ablasskanal (13) aufweist, wobei in einer Ablassposition des Verschlusskörpers (9) ein Ende des Ablasskanals (13) in den unteren Kammerabschnitt (5) mündet und ein anderes Ende des Ablasskanals (13) in einen Bereich außerhalb des Schmelztanks (2) mündet.

13. Schmelzgerät (1) nach Anspruch 12, wobei der Verschlusskörper (9) einen an den Endabschnitt (11) angrenzenden weiteren Abschnitt (19) aufweist, wobei der weitere Abschnitt (19) eine dem unteren Kammerabschnitt (5) zugewandten Bodenfläche (14) und eine an die Bodenfläche (14) angrenzende Seitenfläche (15) aufweist, wobei der Ablasskanal (13) sich von der Bodenfläche (14) bis zu der Seitenfläche (15) erstreckt, insbesondere eine Vertiefung des weiteren Abschnitts (19) den Ablasskanal (13) bildet.

14. Schmelzgerät (1) nach einem der Ansprüche 1 bis 13, wobei das Schmelzgerät (1) einen unterhalb der Ablassöffnung (8) anordenbaren Leitkörper (16) zum Ableiten von aus der Ablassöffnung (8) austretendem Material aufweist, vorzugsweise der Leitkörper (16) beheizbar ist und/oder eine Wandung (12) des Schmelztanks (2) kontaktiert.

15. Schmelzgerät (1) nach einem der Ansprüche 1 bis 14, wobei der Schmelztank (2) ein Gussteil ist, wobei eine Bildung des unteren Kammerabschnitts (5) und der in den unteren Kammerabschnitt (5) mündenden Ablassöffnung (8) durch Verwendung eines Gusskerns erfolgt ist.

## Claims

1. Melter (1) for preparing a molten medium, in particular for preparing a molten adhesive, having a melting tank (2), wherein the melting tank (2) has a melting chamber (3) for receiving and melting the medium to be melted, wherein the melter (1) has a heating device for heating the melting chamber (3), wherein the melting chamber (3) has an upper chamber section (4) and a lower chamber section (5), wherein the melting tank (2) has a dispensing opening (6), wherein the dispensing opening (6) can be fluidly connected to a delivery device (7) for delivering molten medium, wherein the melting tank (2) has a drain opening (8), wherein the dispensing opening (6) and the drain opening (8) open into the lower chamber section (5), wherein the melter (1) has a closure body (9) for closing the drain opening (8), wherein, in a closed position of the closure body (9), in which the closure body (9) closes the drain opening (8), an end section (11) of the closure body (9) projects into the lower chamber section (5).

2. Melter (1) according to Claim 1, wherein, in the closed position of the closure body (9), the end section (11) is spaced apart from walls (12) of the melting tank (2) which delimit the lower chamber section (5), and/or ribs (18) of the melting tank (2).

3. Melter (1) according to Claim 1 or 2, wherein the end section (11), in particular the closure body (9), consists of metal and/or an alloy, the closure body (9) preferably making direct contact with a wall (12) of the melting tank (2).

4. Melter (1) according to any of Claims 1 to 3, wherein, apart from the end section (11) of the closure body (9), the lower chamber section (5) is free of fittings and/or free of structures projecting into the lower chamber section (5), in particular is free of ribs (18) .

5. Melter (1) according to any of Claims 1 to 4, wherein the lower chamber section (5) is designed as a channel which is open in the direction of the upper chamber section (4), wherein the drain opening (8) opens into the channel at one end of the channel.

6. Melter (1) according to any of Claims 1 to 5, wherein the lower chamber section (5) has a longitudinal extent, wherein the end section (11) of the closure body (9) has a longitudinal extent, wherein the longitudinal extent of the end section (11) of the closure body (9) is between 10% and 90%, preferably between 20% and 80%, particularly preferably between 20% and 60%, in particular between 25% and 50%, of the longitudinal extent of the lower chamber section (5).

7. Melter (1) according to any of Claims 1 to 6, wherein, in the closed position, in a region in which the end section (11) is arranged, the lower chamber section (5) has a transverse extent and the end section (11) of the closure body (9) has a transverse extent, wherein the transverse extent of the end section (11) of the closure body (9) is between 10% and 90%, preferably between 20% and 80%, particularly preferably between 35% and 60%, in particular between 40% and 55%, of the transverse extent of the lower chamber section (5).

8. Melter (1) according to any of Claims 1 to 7, wherein the dispensing opening (6) and the drain opening (8) open into the lower chamber section (5) on different sides.

9. Melter (1) according to any of Claims 1 to 8, wherein, in the closed position, the end section (11) extends at least as far as the dispensing opening (6), preferably beyond the dispensing opening (6).

10. Melter (1) according to any of Claims 1 to 9, wherein the melting tank (2) has ribs (18) which project into the melting chamber (3), wherein the ribs (18) are interrupted in the region of the lower chamber section (5) .

11. Melter (1) according to any of Claims 1 to 10, wherein the end section (11) has a cavity (23), in particular wherein the cavity (23) is accessible from an outer side of the melting tank (2).

12. Melter (1) according to any of Claims 1 to 11, wherein the closure body (9) has a drain channel (13), wherein, in a drainage position of the closure body (9), one end of the drain channel (13) opens into the lower chamber section (5) and another end of the drain channel (13) opens into a region outside the melting tank (2).

13. Melter (1) according to Claim 12, wherein the closure body (9) has a further section (19), which adjoins the end section (11), wherein the further section (19) has a bottom surface (14), which faces the lower chamber section (5), and a side surface (15), which adjoins the bottom surface (14), wherein the drain channel (13) extends from the bottom surface (14) to the side surface (15), in particular a depression of the further section (19) forms the drain channel (13).

14. Melter (1) according to any of Claims 1 to 13, wherein the melter (1) has a guide body (16) which can be arranged below the drain opening (8) to guide away material emerging from the drain opening (8), wherein the guide body (16) can preferably be heated and/or makes contact with a wall (12) of the melting tank (2).

15. Melter (1) according to any of Claims 1 to 14, wherein the melting tank (2) is a casting, wherein the lower chamber section (5) and the drain opening (8) opening into the lower chamber section (5) are formed by using a casting core.

## Revendications

1. Appareil de fusion (1) pour la fourniture d'un milieu fondu, notamment pour la fourniture d'un adhésif fondu, présentant un réservoir de fusion (2), dans lequel le réservoir de fusion (2) présente une chambre de fusion (3) pour recevoir et faire fondre le milieu à faire fondre, dans lequel l'appareil de fusion (1) présente un dispositif de chauffage pour chauffer la chambre de fusion (3), dans lequel la chambre de fusion (3) présente une section de chambre supérieure (4) et une section de chambre inférieure (5), dans lequel le réservoir de fusion (2) présente une ouverture de distribution (6), dans lequel l'ouverture de distribution (6) peut être reliée fluidiquement à un dispositif de transport (7) pour transporter le milieu fondu, dans lequel le réservoir de fusion (2) présente une ouverture d'évacuation (8), dans lequel l'ouverture de distribution (6) et l'ouverture d'évacuation (8) débouchent dans la section de chambre inférieure (5), dans lequel l'appareil de fusion (1) présente un corps de fermeture (9) pour fermer l'ouverture d'évacuation (8), dans lequel, dans une position de fermeture du corps de fermeture (9) dans laquelle le corps de fermeture (9) ferme l'ouverture d'évacuation (8), une section d'extrémité (11) du corps de fermeture (9) fait saillie dans la section de chambre inférieure (5).

2. Appareil de fusion (1) selon la revendication 1, dans lequel, dans la position de fermeture du corps de fermeture (9), la section d'extrémité (11) est espacée de parois (12) du réservoir de fusion (2), qui délimitent la section de chambre inférieure (5), et/ou de nervures (18) du réservoir de fusion (2).

3. Appareil de fusion (1) selon la revendication 1 ou 2, dans lequel la section d'extrémité (11), notamment le corps de fermeture (9), est constituée de métal et/ou d'un alliage, de préférence le corps de fermeture (9) est en contact direct avec une paroi (12) du réservoir de fusion (2).

4. Appareil de fusion (1) selon l'une quelconque des revendications 1 à 3, dans lequel la section de chambre inférieure (5), à l'exception de la section d'extrémité (11) du corps de fermeture (9), est dépourvue de composants internes et/ou est dépourvue de structures faisant saillie dans la section de chambre inférieure (5), notamment est dépourvue de nervures (18).

5. Appareil de fusion (1) selon l'une quelconque des revendications 1 à 4, dans lequel la section de chambre inférieure (5) est réalisée sous forme de canal ouvert en direction de la section de chambre supérieure (4), dans lequel l'ouverture d'évacuation (8) débouche dans le canal à une extrémité du canal.

6. Appareil de fusion (1) selon l'une quelconque des revendications 1 à 5, dans lequel la section de chambre inférieure (5) présente une extension longitudinale, dans lequel la section d'extrémité (11) du corps de fermeture (9) présente une extension longitudinale, dans lequel l'extension longitudinale de la section d'extrémité (11) du corps de fermeture (9) est comprise entre 10 % et 90 %, de préférence entre 20 % et 80 %, de manière particulièrement préférée entre 20 % et 60 %, notamment entre 25 % et 50 %, de l'extension longitudinale de la section de chambre inférieure (5).

7. Appareil de fusion (1) selon l'une quelconque des revendications 1 à 6, dans lequel, dans la position de fermeture, dans une zone dans laquelle est agencée la section d'extrémité (11), la section de chambre inférieure (5) présente une extension transversale et la section d'extrémité (11) du corps de fermeture (9) présente une extension transversale, dans lequel l'extension transversale de la section d'extrémité (11) du corps de fermeture (9) est comprise entre 10 % et 90 %, de préférence entre 20 % et 80 %, de manière particulièrement préférée entre 35 % et 60 %, notamment entre 40 % et 55 %, de l'extension transversale de la section de chambre inférieure (5).

8. Appareil de fusion (1) selon l'une quelconque des revendications 1 à 7, dans lequel l'ouverture de distribution (6) et l'ouverture d'évacuation (8) débouchent dans la section de chambre inférieure (5) sur des côtés différents.

9. Appareil de fusion (1) selon l'une quelconque des revendications 1 à 8, dans lequel la section d'extrémité (11), dans la position de fermeture, s'étend au moins jusqu'à l'ouverture de distribution (6), de préférence au-delà de l'ouverture de distribution (6).

10. Appareil de fusion (1) selon l'une quelconque des revendications 1 à 9, dans lequel le réservoir de fusion (2) présente des nervures (18) faisant saillie dans la chambre de fusion (3), dans lequel les nervures (18) sont interrompues dans la zone de la section de chambre inférieure (5).

11. Appareil de fusion (1) selon l'une quelconque des revendications 1 à 10, dans lequel la section d'extrémité (11) présente une cavité (23), notamment la cavité (23) est accessible depuis un côté extérieur du réservoir de fusion (2).

12. Appareil de fusion (1) selon l'une quelconque des revendications 1 à 11, dans lequel le corps de fermeture (9) présente un canal d'évacuation (13), dans lequel, dans une position d'évacuation du corps de fermeture (9), une extrémité du canal d'évacuation (13) débouche dans la section de chambre inférieure (5) et une autre extrémité du canal d'évacuation (13) débouche dans une zone à l'extérieur du réservoir de fusion (2).

13. Appareil de fusion (1) selon la revendication 12, dans lequel le corps de fermeture (9) présente une autre section (19) adjacente à la section d'extrémité (11), dans lequel l'autre section (19) présente une surface de fond (14) faisant face à la section de chambre inférieure (5) et une surface latérale (15) adjacente à la surface de fond (14), dans lequel le canal d'évacuation (13) s'étend depuis la surface de fond (14) jusqu'à la surface latérale (15), notamment un renfoncement de l'autre section (19) forme le canal d'évacuation (13).

14. Appareil de fusion (1) selon l'une quelconque des revendications 1 à 13, dans lequel l'appareil de fusion (1) présente un déflecteur (16) pouvant être agencé en dessous de l'ouverture d'évacuation (8) pour évacuer le matériau sortant de l'ouverture d'évacuation (8), le déflecteur (16) pouvant de préférence être chauffé et/ou entrant en contact avec une paroi (12) du réservoir de fusion (2).

15. Appareil de fusion (1) selon l'une quelconque des revendications 1 à 14, dans lequel le réservoir de fusion (2) est une pièce coulée, dans lequel une formation de la section de chambre inférieure (5) et de l'ouverture d'évacuation (8) débouchant dans la section de chambre inférieure (5) a lieu en utilisant un noyau de coulée.
